# NEUE EUROPÄISCHE PATENTSCHRIFT

(11) **EP 2 414 553 B2**
(45) Veröffentlichungstag und Bekanntmachung des Hinweises auf die Entscheidung über den Einspruch: **09.12.2020**
(45) Hinweis auf die Patenterteilung: 08.07.2015
(21) Anmeldenummer: 10708124.2
(22) Anmeldetag: 05.03.2010
(51) Int. Cl.: C22C 9/01, F16D 23/02

(54) **SYNCHRONRING**
SYNCHRONIZING RING
BAGUE DE SYNCHRONISATION

(30) Priorität: 01.04.2009 DE 102009015811
(43) Veröffentlichungstag der Anmeldung: 08.02.2012
(73) Patentinhaber: Diehl Metall Stiftung & Co. KG, 90552 Röthenbach (DE)
(72) Erfinder: GAAG, Norbert, 91207 Lauf (DE); GEISE, Jürgen, 90480 Nürnberg (DE); GEBHARD, Friedrich, 91207 Lauf/Peg (DE)
(74) Vertreter: Diehl Patentabteilung
(86) Internationale Anmeldenummer: PCT/EP2010/001370
(87) Internationale Veröffentlichungsnummer: WO 2010/112120

(56) Entgegenhaltungen:
- EP-A1- 0 786 299
- WO-A1-2007/012386
- JP-A- 8 209 267
- JP-A- 2001 355 029

## Beschreibung

Die Erfindung betrifft einen Synchronring nach Anspruch 1.

Nach dem Stand der Technik sind aus Stahl hergestellte Synchronringe allgemein bekannt, bei denen eine Reibfläche mit einer Karbonschicht beschichtet ist. Solche Synchronringe zeichnen sich durch eine besonders hohe Härte aus. Zur deren Herstellung mittels Kaltumformung sind allerdings relativ teure Werkzeuge erforderlich. Aus Stahl hergestellte Synchronringe können erst ab relativ hohen Stückzahlen rentabel hergestellt werden.

Aus der DE 37 35 783 C1 ist ein aus einer Kupfer-Zink-Legierung hergestellter Synchronring bekannt. Die bekannte Kupfer-Zink-Legierung ist relativ teuer. Aus der JP 2001 355 029 ist ein ebenfalls ein aus einer Kupferlegierung hergestellter Synchronring bekannt. Die EP 0 786 299 A1 offenbart ein Herstellungsverfahren für einen Synchronring.

Aufgabe der Erfindung ist es, die Nachteile nach dem Stand der Technik zu beseitigen. Es soll insbesondere ein auch in Kleinserien kostengünstig herstellbarer Synchronring angegeben werden, welcher den Anforderungen heutiger Getriebe genügt.

Diese Aufgabe wird durch die Merkmale der Ansprüche 1 und 6 gelöst. Zweckmäßige Ausgestaltungen der Erfindung ergeben sich aus den Merkmalen der abhängigen Ansprüche.

Nach Maßgabe der Erfindung wird vorgeschlagen, dass das Substrat aus einer Kupfer-Zink-Legierung hergestellt ist. - Das vorgeschlagene Substrat lässt sich kostengünstig auch in Kleinserien zu Synchronringen mittels Warmumformung verarbeiten. Die dafür erforderlichen Werkzeuge sind im Vergleich zu den zur Kaltumformung von Stahlsubstraten erforderlichen Werkzeugen wesentlich preisgünstiger. Überraschenderweise hat es sich gezeigt, dass sich auch das vorgeschlagene Substrat mit einer Karbonschicht versehen lässt. Ein aus dem erfindungsgemäß vorgeschlagenen Substrat hergestellter Synchronring, bei dem eine Reibfläche mit einer Karbonschicht versehen ist, erfüllt die Anforderungen, insbesondere die Reib- und Verschleißwerte sowie die Sperrzahnhärten, heutiger Getriebe.

Nach einer vorteilhaften Ausgestaltung der Erfindung ist die Kupfer-Zink-Legierung im Wesentlichen aus dem β-Mischkristall gebildet. Der β-Mischkristall ist vorzugsweise zu mehr als 95%, besonders bevorzugt zu mehr als 99%, in der Kupfer-Zink-Legierung enthalten. Dabei hat es sich als zweckmäßig erwiesen, den β-Mischkristall durch einen Zusatz von Al oder Mn zu stabilisieren. Der Zusatz von Al bewirkt eine Verbesserung der Vickers-Härte HV des Substrats. Durch einen Zusatz von Mn kann eine Stabilisierung des β-Mischkristalls erreicht werden. Infolgedessen kann auch ohne eine Glühung des Substrats eine hervorragende Vickers-Härte HV von mehr als 200 erreicht werden. Ein Zusatz von Mn ist nicht unbedingt oder nur in geringen Mengen erforderlich.

Gemäß der Erfindung enthält die Kupfer-Zink-Legierung die folgenden Bestandteile:
64 bis 66% Cu,
(a) 4,7 bis 5,2% Al, oder
(b) 4 bis 6% Al und
3,5 bis 4,5% Mn, sowie
< 0,3% Fe,
< 0,1% Si,
< 0,1% Pb,
< 0,2% Ni,
< 0,3% Sn,
Rest Zn sowie unvermeidbare Verunreinigungen.

Die vorgeschlagene Legierung ist preisgünstig und lässt sich ohne großen Aufwand umformen.

Als zweckmäßig hat es sich erwiesen, dass der Gehalt an Kupfer 64 bis 66% ist. Der Gehalt an Mn beträgt vorteilhafterweise 3,5 bis 4,5%, bevorzugt 3,6 bis 4,0%, da hierdurch der β-Mischkristall stabilisiert wird. Besonders zweckmäßig hat sich bei der Variante (b) ein Gehalt an Aluminium von 4,5 bis 5,5% erwiesen, bevorzugt von 4,7 bis 5,2%, durch den die Härte der Legierung im Zielkorridor einstellbar ist. Der Rest an Zn beträgt vorteilhafterweise 24 bis 26%.

Nach weiterer Maßgabe der Erfindung wird die Verwendung einer Kupfer-Zink-Legierung zur Herstellung eines mit einer Karbonschicht beschichteten Synchronrings vorgeschlagen. Dabei ist die Karbonschicht insbesondere auf einer Reibfläche des Synchronrings vorgesehen. Wegen der vorteilhaften Ausgestaltung der Verwendung wird auf die vorangegangenen Ausgestaltungsmerkmale zum Synchronring verwiesen. Die dort beschriebenen Ausgestaltungsmerkmale können auch Ausgestaltungsmerkmale der Verwendung bilden.

Im Sinne der vorliegenden Erfindung wird unter "%" Gewichts-% verstanden.

Nachfolgend werden Ausführungsbeispiele der Erfindung näher erläutert. Die folgende Tabelle 1 gibt Soll- und Ist-Zusammensetzungen unterschiedlicher Versuchslegierungen wieder. Lediglich die Legierungen 2459 und 2460 sind erfindungsgemäß.

**Tabelle 1**

| | **Cu** | | **Al** | | **Mn** | | **Fe** | | **Ni** | | **Si** | | **Pb** | | **Sn** | | **Zn** | |
|---|---|---|---|---|---|---|---|---|---|---|---|---|---|---|---|---|---|---|
| | **Ist** | Soll | **Ist** | Soll | **Ist** | Soll | **Ist** | Soll | **Ist** | Soll | **Ist** | Soll | **Ist** | Soll | **Ist** | Soll | **Ist** | Soll |
| **2451** | **50,31** | 51,00 | | | | | | | | | | | | | | | **Rest** | |
| **2452** | **51,83** | 52,00 | | | | | | | | | | | | | | | **Rest** | |
| **2453** | **52,86** | 53,00 | | | | | | | | | | | | | | | **Rest** | |
| **2454** | **54,01** | 55,00 | | | | | | | | | | | | | | | **Rest** | |
| **2455** | **55,90** | 56,00 | | | | | | | | | | | | | | | **Rest** | |
| **2456** | **56,96** | 57,00 | **1,96** | 2,00 | | | | | | | | | | | | | **Rest** | |
| **2457** | **64,41** | 64,60 | **4,85** | 5,00 | | | | | | | | | | | | | **Rest** | |
| **2458** | **58,04** | 58,10 | **1,94** | 2,00 | | | | | | | | | | | | | **Rest** | |
| **2459** | **65,54** | 65,90 | **4,81** | 5,00 | | | | | | | | | | | | | **Rest** | |
| **2460** | **65,20** | 65,20 | **4,90** | 5,00 | **3,74** | 4,00 | | | | | | | | | | | **Rest** | 25,80 |
| **2461** | **77,75** | 77,60 | **4,86** | 5,00 | **2,82** | 3,00 | **1,38** | 1,50 | | | | | | | | | **Rest** | |
| **2462** | **55,28** | 54,80 | **3,65** | 3,60 | **0,09** | 0,00 | **0,76** | 0,70 | **6,94** | 6,80 | **2,16** | 2,10 | **0,08** | 0,00 | **0,06** | 0,00 | **Rest** | 32,00 |

Die folgende Tabelle 2 gibt die Härtewerte der Versuchslegierungen (= Leg.) gemäß Tabelle 1 im geglühten und im ungeglühten Zustand sowie eine Gefügebeschreibung der Versuchslegierungen wieder.

**Tabelle 2**

| | **Härte in HV10** | | | **Gefügebeurteilung** |
|---|---|---|---|---|
| Leg. | Ausgangszustand | geglüht 300°C/2 h | Geglüht 400°C/2 h | |
| | | | | |
| 2451 | 94 | 99 | 100 | β-Gefüge |
| 2452 | 112 | 100 | 98 | β-Gefüge |
| 2453 | 112 | 108 | 112 | β-Gefüge |
| 2454 | 100 | 129 | 112 | β-Gefüge |
| 2455 | 111 | 112 | 114 | Alpha-Ausscheidungen an den Korngrenzen |
| 2456 | 137 | 139 | 143 | β-Gefüge |
| 2457 | 197 | 197 | 222 | β-Gefüge |
| 2458 | 141 | 146 | 137 | β-Gefüge |
| 2459 | 191 | 196 | 195 | β-Gefüge |
| 2460 | 214 | 214 | 214 | feines β-Gefüge |
| 2461 | 154 | 130 | 144 | Alpha-β-Gefüge mit kleinen schwarzen Ausscheidungen = Fe-Silicide |
| 2462 (=488) | 256 | 279 | 249 | β-Gefüge mit intermetallischen Phasen |

Wie aus der Tabelle 2 ersichtlich ist, zeichnen sich insbesondere die Versuchslegierung Nr. 2460 und 2462 durch eine besonders hohe Vickers-Härte HV10 von mehr als 200 im ungeglühten Zustand aus. Die Versuchslegierung Nr. 2460 zeichnet sich ferner dadurch aus, dass sie aus relativ wenigen Bestandteilen besteht. Die Materialkosten betragen ca. 80% der Kosten von Legierung 2462.

## Patentansprüche

1. Synchronring, bei dem eine Reibfläche eines aus Metall in Form des Synchronrings hergestellten Substrats mit einer Karbonschicht beschichtet ist, wobei das Substrat aus einer Kupfer-Zink-Legierung hergestellt ist, welche die folgenden Bestandteile enthält:
64 bis 66% Cu,
(a) 4,7 bis 5,2% Al, oder (b) 4 bis 6% Al und 3,5 bis 4,5% Mn, sowie
< 0,3% Fe,
< 0,1% Si,
< 0,1% Pb,
< 0,2% Ni,
< 0,3% Sn,
Rest Zn sowie unvermeidbare Verunreinigungen.

2. Synchronring nach Anspruch 1,
wobei die Kupfer-Zink-Legierung im Wesentlichen aus dem β-Mischkristall gebildet ist.

3. Synchronring nach einem der vorhergehenden Ansprüche,
wobei bei der Variante (b) der Gehalt an Al 4,5 bis 5,5% ist, bevorzugt ist der Gehalt an Al 4,7 bis 5,2%.

4. Synchronring nach einem der vorhergehenden Ansprüche,
wobei der Gehalt an Mn 3,6 bis 4,0% ist.

5. Synchronring nach einem der vorhergehenden Ansprüche,
wobei der Rest an Zn 24 bis 26% ist.

6. Verwendung einer Kupfer-Zink-Legierung zur Herstellung eines mit einer Karbonschicht beschichteten Synchronrings,
wobei die Kupfer-Zink-Legierung die folgenden Bestandteile enthält:
64 bis 66% Cu,
4,7 bis 5,2% Al, oder (b) 4 bis 6% Al und 3,5 bis 4,5% Mn, sowie
< 0,3% Fe,
< 0,1% Si,
< 0,1% Pb,
< 0,2% Ni,
< 0,3% Sn,
Rest Zn sowie unvermeidbare Verunreinigungen.

7. Verwendung nach Anspruch 6,
wobei Kupfer-Zink-Legierung im Wesentlichen aus dem β-Mischkristall gebildet ist.

8. Verwendung nach einem der Ansprüche 6 oder 7,
wobei bei der Variante (b) der Gehalt an Al 4,5 bis 5,5% ist, bevorzugt ist der Gehalt an Al 4,7 bis 5,2%.

9. Verwendung nach einem der Ansprüche 6 bis 8,
wobei der Gehalt an Mn 3,6 bis 4,0% ist.

10. Verwendung nach einem der Ansprüche 6 bis 9,
wobei der Rest an Zn 24 bis 26% ist.

## Claims

1. Synchronizer ring, wherein a friction surface of a substrate produced from metal in the form of the synchronizer ring is coated with a layer of carbon, wherein the substrate is produced from a copper-zinc alloy which contains the following constituents:
64 to 66% Cu,
(a) 4.7 to 5.2% Al, or (b) 4 to 6% Al and 3.5 to 4.5% Mn, and also
< 0.3% Fe,
< 0.1% Si,
< 0.1% Pb,
< 0.2% Ni,
< 0.3% Sn,
remainder Zn and unavoidable impurities.

2. Synchronizer ring according to Claim 1, wherein the copper-zinc alloy is formed substantially from the β. mixed crystal.

3. Synchronizer ring according to either of the preceding claims, wherein in variant (b) the Al content is 4.5 to 5.5%, the Al content preferably being 4.7 to 5.2%.

4. Synchronizer ring according to one of the preceding claims, wherein the Mn content is 3.6 to 4.0%.

5. Synchronizer ring according to one of the preceding claims, wherein the Zn remainder is 24 to 26%.

6. Use of a copper-zinc alloy for producing a synchronizer ring coated with a layer of carbon, wherein the copper-zinc alloy contains the following constituents:
64 to 66% Cu,
4.7 to 5.2% Al, or (b) 4 to 6% Al and 3.5 to 4.5% Mn, and also
< 0.3% Fe,
< 0.1% Si,
< 0.1% Pb,
< 0.2% Ni,
< 0.3% Sn,
remainder Zn and unavoidable impurities.

7. Use according to Claim 6, wherein the copper-zinc alloy is formed substantially from the β mixed crystal.

8. Use according to either of Claims 6 and 7, wherein in variant (b) the Al content is 4.5 to 5.5%, the Al content preferably being 4.7 to 5.2%.

9. Use according to one of Claims 6 to 8, wherein the Mn content is 3.6 to 4.0%.

10. Use according to one of Claims 6 to 9, wherein the Zn remainder is 24 to 26%.

## Revendications

1. Bague de synchronisation, dans laquelle une surface de frottement d'un substrat fabriqué à partir d'un métal sous forme de la bague de synchronisation est revêtue avec une couche de carbone, le substrat étant fabriqué à partir d'un alliage cuivre-zinc, qui contient les constituants suivants :
64 à 66 % de Cu,
(a) 4,7 à 5,2 % d'Al, ou (b) 4 à 6 % d'Al et 3,5 à 4,5 % de Mn, et
< 0,3 % de Fe,
< 0,1 % de Si,
< 0,1 % de Pb,
< 0,2 % de Ni,
< 0,3 % de Sn,
le reste étant Zn et des impuretés inévitables.

2. Bague de synchronisation selon la revendication 1, dans laquelle l'alliage cuivre-zinc est essentiellement formé à partir du cristal mixte β.

3. Bague de synchronisation selon l'une quelconque des revendications précédentes, dans laquelle dans la variante (b) la teneur en Al est de 4,5 à 5,5 %, la teneur en Al étant de préférence de 4,7 à 5,2 %.

4. Bague de synchronisation selon l'une quelconque des revendications précédentes, dans laquelle la teneur en Mn est de 3,6 à 4,0 %.

5. Bague de synchronisation selon l'une quelconque des revendications précédentes, dans laquelle la teneur résiduelle en Zn est de 24 à 26 %.

6. Utilisation d'un alliage cuivre-zinc pour la fabrication d'une bague de synchronisation revêtue avec une couche de carbone, l'alliage cuivre-zinc contenant les constituants suivants :
64 à 66 % de Cu,
4,7 à 5,2 % d'Al, ou (b) 4 à 6 % d'Al et 3,5 à 4,5 % de Mn, et
< 0,3 % de Fe,
< 0,1 % de Si,
< 0,1 % de Pb,
< 0,2 % de Ni,
< 0,3 % de Sn,
le reste étant Zn et des impuretés inévitables.

7. Utilisation selon la revendication 6, dans laquelle l'alliage cuivre-zinc est essentiellement formé à partir du cristal mixte β.

8. Utilisation selon l'une quelconque des revendications 6 ou 7, dans laquelle dans la variante (b) la teneur en Al est de 4,5 à 5,5 %, la teneur en Al étant de préférence de 4,7 à 5,2 %.

9. Utilisation selon l'une quelconque des revendications 6 à 8, dans laquelle la teneur en Mn est de 3,6 à 4,0 %.

10. Utilisation selon l'une quelconque des revendications 6 à 9, dans laquelle la teneur résiduelle en Zn est de 24 à 26 %.
